(19)

**Europäisches Patentamt**
**European Patent Office**
**Office européen des brevets**

(11) **EP 2 017 989 B1**

(12) **EUROPEAN PATENT SPECIFICATION**

(45) Date of publication and mention
of the grant of the patent:
**19.01.2011 Bulletin 2011/03**

(51) Int Cl.:
*H04J 3/06* (2006.01)     *H04L 12/56* (2006.01)

(21) Application number: **07425441.8**

(22) Date of filing: **18.07.2007**

(54) **A method and system for transmitting data over PDH channels**

Verfahren und System zur Datenübertragung über PDH-Kanälen

Procédé et système de transmission de données via des canaux PDH

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**21.01.2009 Bulletin 2009/04**

(73) Proprietor: **Nokia Siemens Networks S.p.A.**
**20126 Milano (IT)**

(72) Inventor: **Bottiroli, Andrea**
**20060 Gorgonzola (MI) (IT)**

(74) Representative: **Kley, Hansjörg**
**C/O Nokia Siemens Networks GmbH & Co. KG**
**COO RTP IPR Patent Administration**
**80240 München (DE)**

(56) References cited:
- **"GFP frame mapping into Plesiochronous Digital Hierarchy (PDH); G.8040/Y.1340 (09/05)" ITU-T STANDARD IN FORCE (I), INTERNATIONAL TELECOMMUNICATION UNION, GENEVA, CH, no. G8040/Y1340 9/5, 6 September 2005 (2005-09-06), XP017404625**
- **"Generic framing procedure (GFP); G.7041/Y. 1303 (08/05)" ITU-T STANDARD IN FORCE (I), INTERNATIONAL TELECOMMUNICATION UNION, GENEVA, CH, no. G7041/Y1303 8/5, 22 August 2005 (2005-08-22), XP017404569**
- **"Application Note 3849 - Ethernet-over-PDH Technology Overview" DALLAS SEMICONDUCTOR MAXIM, [Online] 30 May 2006 (2006-05-30), XP002459059 Retrieved from the Internet: URL:http://pdfserv.maxim-ic.com/en/an/AN38 49.pdf> [retrieved on 2007-11-16]**
- **CHEN WENTAO ET AL.: "Performance Analysis of Two Ethernet over E1 Schemes" TSINGHUA SCI. TECH.; TSINGHUA SCIENCE AND TECHNOLOGY, vol. 12, no. 1, February 2007 (2007-02), pages 70-76, XP002458889 State Key Laboratory on Microwave and Digital Communication Department of Electronic Engineering Tsinghua University, Beijing, 100084, China ISSN: 1007-0214**

**Description**

The invention relates to a method of transmitting a data flow over at least on Plesiochronous Digital Hierarchy channel according to the preamble of claim 1 as well as a system for carrying out the method according to claim 7.

**Description of the related art**

Properly managing communication networks adapted to handle multi-standard traffic (i.e. hybrid network standards) is an ever increasing requirement and conventional technology-specific interface solutions become increasingly insufficient for that purpose.

The ITU-T G.7041 Recommendation [D2] defines a Generic Framing Procedure GFP to delineate octet-aligned, variable-length payloads from higher-level client signals for subsequent mapping into octet synchronous paths. Mapping of such a GFP frame into PDH-type traffic forms the subject mater of the ITU-T G.8040 Recommendation.

The generic framing procedure GFP, as defined in ITU-T Rec. G.7041/Y.1303 [2], was developed for transport of data clients over synchronous digital hierarchy (SDH) networks of ITU-T Rec. G.707/Y.1322 and optical transport networks OTN of ITU-T Rec. G.709/Y.1331. Interfaces from the plesiochronous digital hierarchy PDH are ubiquitous, especially in the access networks where there is a desire to carry client data signals. GFP has been identified as a suitable technique for mapping data frames into PDH signals of the hierarchies of ITU-T Rec. G.704 as well as the virtually concatenated PDH signals as defined in ITU-T Rec. G.7043/Y.1343.

Recommendation ITU-T G.8040 [D1] provides for mapping of GFP-encapsulated data into PDH signals for transport over PDH trails. The octet-wise mapping into octet-oriented transport containers originally defined for GFP is maintained. When a GFP frame is to be mapped onto T1 signals, the 1544 kbit/s signal payload is typically arranged as 24 octets (i.e., time slots 1 to 24). The multiframe structure for the 24-frame multiframe as described in ITU-T Rec. G. 704 is typically used. The first octet following the first framing bit of the multiframe is used to carry the concatenation overhead, as defined in ITU-T Rec. G.7043/Y.1343. This octet is reserved for all values of N, where N = 1...16.

When neither of the VCAT/LCAS arrangements to be discussed in the following is used (which implies one 1544 kbit/s signal), the concatenation overhead octet shall is set to a value of 0x00. When neither GFP client data frames nor GFP client management frames are available from the GFP source adaptation process, GFP Idle frames shall be inserted in order to perform rate adaptation, filling the server capacity as described in ITU-T Rec. G.7041/Y.1303. GFP frames are scrambled consistent with ITU-T Rec. G.7041/Y.1303. GFP frame delineation is performed in the manner described in ITU-T Rec. G.7041/Y.1303.

Conversely, when a GFP frame is to be mapped onto E1 signals, the basic frame structure at 2048 kbit/s as described in ITU-T Rec. G.704 shall be used. Time slots 1-31 are used to carry the GFP octets. The multiframe structure for the 16-frame multiframe as described in ITU-T Rec. G.704 is be used. Time slot 1 of the first frame of the multiframe is used to carry the concatenation overhead, as defined in ITU-T Rec. G.7043/Y.1343. This octet is reserved for all values of N, where N = 1...16.

For the non-VCAT/LCAS case (which implies one 2048 kbit/s signal), the concatenation overhead octet shall be set to a value of 0x00. When neither GFP client data frames nor GFP client management frames are available from the GFP source adaptation process, GFP Idle frames shall be inserted in order to perform rate adaptation, filling the server capacity as described in ITU-T Rec. G.7041/Y.1303. GFP frames are scrambled consistent with ITU-T Rec. G. 7041/Y.1303. GFP frame delineation is performed in the manner described in ITU-T Rec. G.7041/Y.1303.

Adopting the ITU-T strategy leads to the following throughput values:

$$\text{Throughput}_{REAL} = \frac{AvPacketSize}{AvPacketSize + (8 \, or \, 68)} \times \text{Throughput}_{TEO}$$

where: $\text{Throughput}_{TEO} = \left(2048 \times \frac{31}{32}\right) - \left(\frac{64}{16}\right) = 1980 \, Kbit/s$   when an E1 signal is considered

and  $\text{Throughput}_{TEO} = 1544 \times \frac{575}{579} = 1533,3 \, Kbit/s$  when a T1 signal is used.

Other recommendations such as ITU-T G.7042 and ITU-T G.7043 describe additional procedures known as Container - Link Capacity Adjustment Scheme C-LCAS and Container - Virtual conCATenation C-VCAT, which can be used in the context referred to herein.

In the case of Virtual concatenation VCAT of PDH signals (ITU-T G.7043), the basic PDH signal frame structures for 1544, 2048 and 44 736 kbit/s signals are defined in ITU-T Rec. G.704 and the octet structure 34 368 kbit/s is defined in ITU-T Rec. G.832. Recommendation G.7043 enhances the functions of these frame structures to support the virtual concatenation of these frame structures to form larger transport entities (containers). Only frame structures of the same type can be virtually concatenated together. This virtual concatenation supports the Link Capacity Adjustment Scheme LCAS specified in ITU-T Rec. G.7042/Y.1305. The concatenation overhead octet is time-multiplexed to carry the overhead required for virtual concatenation. This time multiplexing takes the form of a 16-nibble VLI (Very Long Instruction) that is transmitted one nibble per concatenation overhead octet. The concatenation overhead octet contains one nibble for the VLI and one nibble for the MFI1. The definitions of the fields within the control packet are given in ITU-T Rec. G. 7042/Y.1305.

In the case of Virtual concatenation VCAT of T1 signals, the multiframe structure for the 24-frame multiframe as described in ITU-T Rec. G.704 is used. The first octet following the first framing bit of the multiframe is used to carry the concatenation overhead for each 1544 kbit/s signal. This octet is reserved for all values of N, where N = 1...16. The concatenation overhead octet allows the virtual concatenation of N 1544 kbit/s signals to form a single channel referred to as a virtual concatenation group VCG. The payload container bandwidth of the resulting VCG is $N\times[1536-(64/24)]$ kbit/s $\cong N\times1533$ kbit/s. Client signals are mapped into the $N\times1544$ kbit/s signal members of the VCG on an octet-wise, round-robin basis. The round robin sequence follows the ascending order of the per-member sequence numbers that are communicated in each member's concatenation overhead octet. For example, if a data packet's octet 1 is mapped into the 1544 kbit/s signal with sequence number 0, the next packet octet is mapped into the 1544 kbit/s signal with sequence number 1, etc. Up to sixteen 1544 kbit/s signals can be virtually concatenated into a single VCG. In general, the virtual concatenation and associated Link Capacity Adjustment Scheme LCAS functionality and definitions are the same as those specified for SDH virtual containers in ITU-T Rec. G.707/Y.1322. All $N\times1544$ kbit/s member signals that constitute a VCG are aligned at their transmission from the VCG source with respect to their 1544 kbit/s clock frequency, PDH signal frame and multiframe, MFI1 and MFI2. The VCG sink can determine the differential delay that the different members encountered in the network by comparing their respective MFI1 and MFI2 values, and performing the proper realignment. The four MSBs of MFI2 are not used for differential delay compensation. The maximum differential delay that can be detected is $\pm(256)(24)(125\mu s)/2 = \pm384$ ms.

In the case of Virtual concatenation VCAT of E1 signals, the basic frame and 16-frame multiframe structure at 2048 kbit/s as described in ITU-T Rec. G.704 shall be used. The time slot 1 of the first frame of the multiframe is used to carry the concatenation overhead for each 2048 kbit/s signal. This octet is reserved for all values of N, where N = 1... 16. The concatenation overhead octet allows the virtual concatenation of N 2048 kbit/s signals to form a single channel referred to as a virtual concatenation group. The payload container bandwidth of the resulting VCG is $N\times[1984-(64/16)]$ kbit/s = $N\times1980$ kbit/s. Client signals are mapped into the $N\times2048$ kbit/s signal members of the VCG on an octet-wise, round-robin basis. The round robin sequence follows the ascending order of the per-member sequence numbers that are communicated in each member's concatenation overhead octet. For example, if a data packet's octet 1 is mapped into the 2048 kbit/s signal with sequence number 0, the next packet octet is mapped into the 2048 kbit/s signal with sequence number 1, etc. Up to sixteen 2048 kbit/s signals can be virtually concatenated into a single VCG. The concatenation octet definitions for the 2048 kbit/s signal are the same as those specified in the foregoing for T1 signals. Also the differential delay compensation for the 2048 kbit/s signal is the same, except that the clock frequency is 2048 kbit/s. The four MSBs of MFI2 are not used for differential delay compensation. The maximum differential delay that can be detected is $\pm(256)(16)(125\mu s)/2 = \pm256$ ms.

Recommendation ITU-T G. 7042 specifies a Link Capacity Adjustment Scheme LCAS for VCAT signals (ITU-T G.7042) for use in increasing or decreasing the capacity of a container that is transported in an SDH/OTN network using Virtual Concatenation. In addition, the scheme will automatically decrease the capacity if a member experiences a failure in the network and increase the capacity when the network fault is repaired. The scheme is applicable to every member of the Virtual Concatenation group. This Recommendation defines the required states at the source and at the sink side of the link as well as the control information exchanged between both the source and the sink side of the link to enable the flexible resizing of this Virtual Concatenated signal.

LCAS in the virtual concatenation source and sink adaptation functions provides a control mechanism to hitless increase or decrease the capacity of a VCG link to meet the bandwidth needs of the application. Hitless bandwidth modification can only be achieved when the transmission of the active members belonging to the VCG - before and after the bandwidth modification - is error free. It also provides the capability of temporarily removing member links that have experienced a failure. The LCAS scheme assumes that in cases of capacity adjustment (i.e., creation, increase, decrease or deletion), the construction or destruction of the end-to-end path of each individual member is the responsibility of the Network and Element Management Systems. A VCG capacity increase or decrease can be initiated at either end.

Synchronization of changes in the capacity of the transmitter So and the receiver Sk shall be achieved by a control packet. Each control packet describes the state of the link during the next control packet. Changes are sent in advance so that the receiver can switch to the new configuration as soon as it arrives.

The control packet consists of fields dedicated to a specific function. The control packet contains information sent from So to Sk and information sent from Sk to So, i.e.:

Forward direction, So to Sk:

MultiFrame Indicator MFI field;
Sequence Indicator SQ field;
Control CTRL field;
Group Identification GID bit.
Return direction, Sk to So:
Member Status MST field;
Re-Sequence Acknowledge RS-Ack bit.

The LCAS generally assumes directional independence of individual members of a virtually concatenated group. This implies connection asymmetry, i.e., the bandwidth of the forward transport is independent of the bandwidth of the return transport.

The Application Note 3849 Ethernet-over PDH Technology Overview of DALLAS Semiconductor [D3] discloses an Ethernet Transport over NON-Ethernet networks. It describes Frame encapsulation, where Ethernet Frames are placed as payload inside an auxiliary format for transmission on a NON-Ethernet network. Since bursts of have to be placed, some technologies have specific advantages. One is the Generic Framing Procedure GFP defined in ITU-T G. 7041. The virtual Concatenation VCAT according to ITU-T G.707 operates with a byte as follows:

The lower nibble of the VCAT contains a Multi-Frame Indicator MFI used to align frames from links with varying transmission delays.

The higher nibble contains a uniquely defined control word for each of the 16 values of MFI. This upper nibble is called the VLI for Virtual Concatenation and Link Capacity Adjustment Scheme LCAS information.

## Object and summary of the invention

A basic drawback of the arrangements described in the foregoing, when applied to networks required to handle hybrid network standards, lies in the inherent complexity of their control structure and the overhead inevitably associated thereto.

A basic object of the invention is thus to provide an arrangement which may overcome such a drawback. A specific object of the invention is to provide an effective mechanism to adapt variable length packet VLP traffic to a PDH transport network (i.e. to provide a VLPoverE1 or VLPoverT1 transmission scheme). All this while preserving the possibility of implementing Container - Link Capacity Adjustment Scheme C-LCAS and /or Container - Virtual conCATenation C-VCAT, preferably by resorting to improved arrangements over those described in the recommendations ITU-T G.7042 and ITU-T G.7043.

According to the present invention, that object is achieved by means of a method having the features set forth in the claims that follow. The invention also relates to a corresponding system, a corresponding network as well as a corresponding computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

The working principle of the invention will now be described more in detail with reference to the accompanying drawings

## Brief description of the annexed drawings

The invention will now be described, by way of example only, with reference to the enclosed figures of drawing, wherein:

- Figure 1 is representative of an arrangement for transporting a VLP input data flow over a E1 PDH channel;
- Figure 2 further details the container arrangement of figure 1;
- Figure 3 illustrates a variant of the container arrangement of figure 1
- Figure 4 is representative of an arrangement for transporting a VLP input data flow over a T1 PDH channel;
- Figure 5 further details the container arrangement of figure 4;

- Figure 6 illustrates a variant of the container arrangement of figure 4;

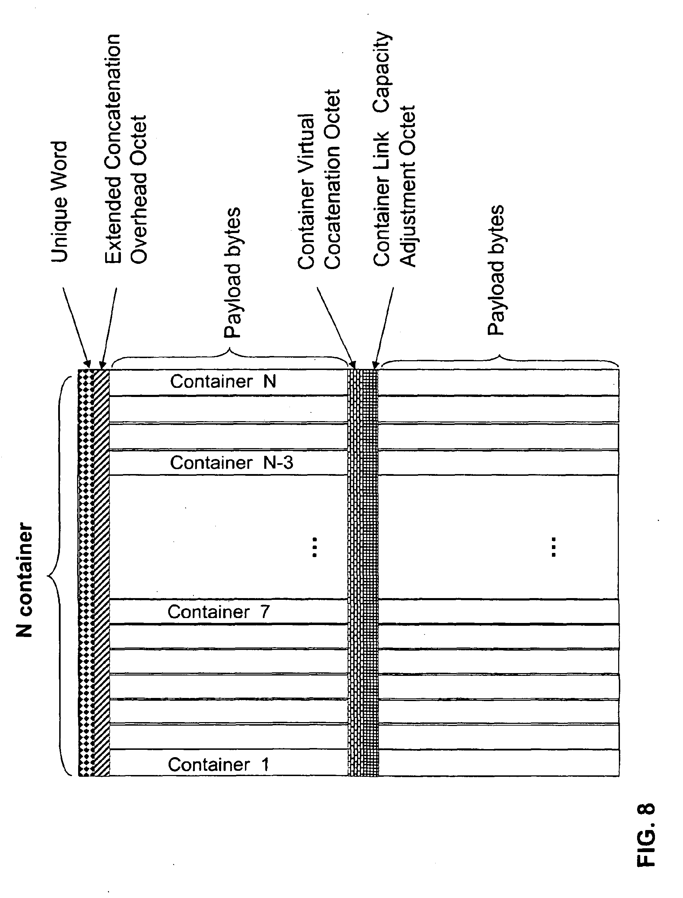

- Figures 7 and 8 are illustrative of Container Virtual concatenation procedures adapted for use within the context of the arrangement described herein;
- Figure 9 are illustrative of Virtual Container Concatenation resynchronization and reordering procedures adapted for use within the context of the arrangement described herein;
- Figure 10 is illustrative of a frame alignment algorithm adapted for use within the context of the arrangement described herein;
- Figure 11 is illustrative of a Container Link Capacity Adjustment Scheme adapted for use within the context of the arrangement described herein; and
- Figure 12 is further illustrative of the Container Link Capacity Adjustment Scheme as considered herein.

## Detailed description of preferred embodiments

The following detailed description of exemplary embodiments will generally refer to transmitting over one or more E1 or T1 PDH channels a continuous packet flow obtained starting from a Variable Length Packet VLP input flow. One Variable Length Packet VLP signal, as Ethernet signal, can be transported over one or more PDH signals forming a Virtual Concatenated Containers Group (VCCG) by means of container aggregation.

Preferably, such a VLP input flow has been mapped into the continuous packet flow in question by resorting to any of the methods described in a co-pending application filed on even date by the same applicant.

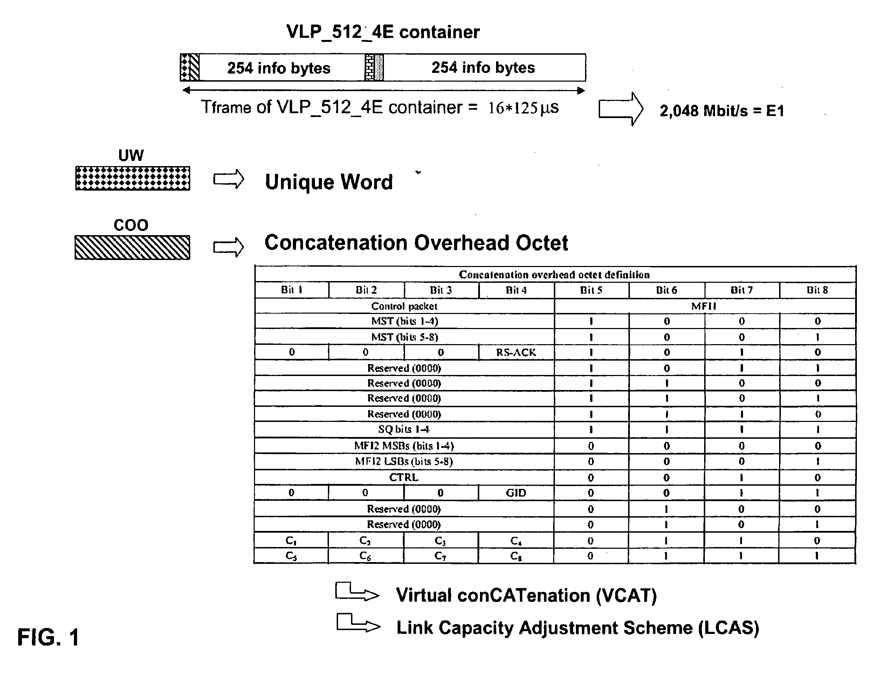

Figure 1 is a functional diagram illustrative of a sequence of steps taken for mapping such a continuous packet flow into one or more E1 (2048 Kbit/s) PDH signals.

In order to realize this mapping two specific containers are been defined.

The first of these containers is designated a VLP_512_4E container.

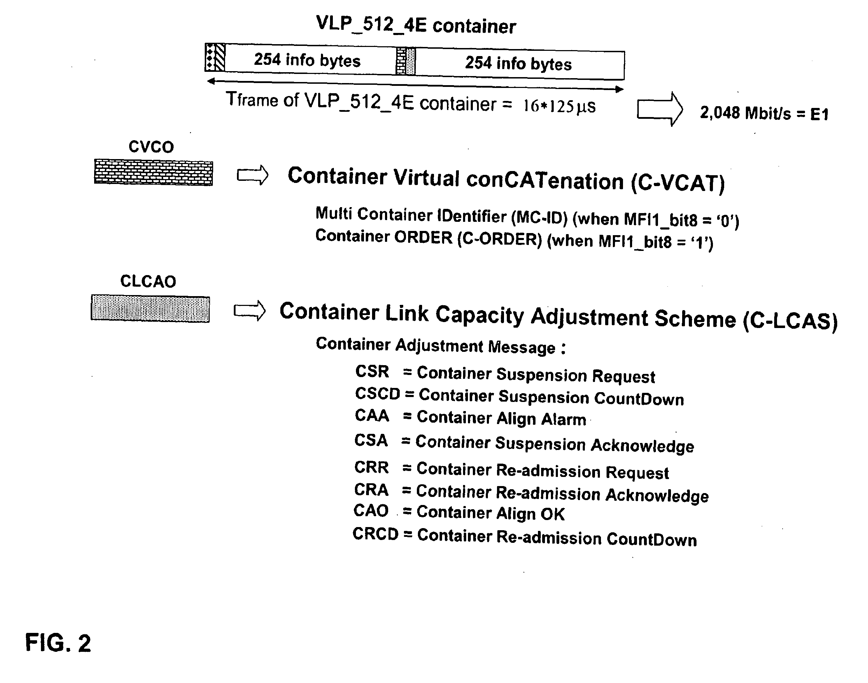

As shown in figure 1, such a VLP_512_4E container is comprised of 512 bytes repeated every 2 ms. That means that the VLP_512_4E container throughput is equal to 2,048 Mbit/s, which makes it possible to map this container into one unframed E1 signal. Within the VLP_512_4E container four bytes are reserved for special purposes as better detailed in figure 2:

- Unique Word UW;
- Concatenation Overhead Octet COO;
- Container Virtual Concatenation Octet CVCO;
- Container Link Capacity Adjustment Octet CLCAO.

The "Unique Word" represents a synchronization word, which permits to identify the VLP_512_4E container frame alignment.

The "Concatenation Overhead Octet" is the Concatenation Overhead Octet as described in ITU-T reference G.7043. By means of this byte VCAT and LCAS operations, as described in ITU-T references G.7042 and G.7043 can be realized.

The "Container Virtual Concatenation Octet" transports Multi Container Identifier MC-ID and container order information C-ORDER that are used to realize Container Virtual Concatenation C-VCAT as described in the following.

The "Container Link Capacity Adjustment Octet" transports alarm and management bits that are used in order to realize Container Link Capacity Adjustment Scheme C-LCAS as described in the following.

The second type of container considered herein is designated a VLP_512_2E container.

The VLP_512_2E container is comprised of 512 bytes repeated every 2 ms. As is the case for the VLP_512_4E container discussed previously, the throughput for the VLP_512_2E container is equal to 2,048 Mbit/s, which again makes it possible to map this container onto one unframed E1 signal.

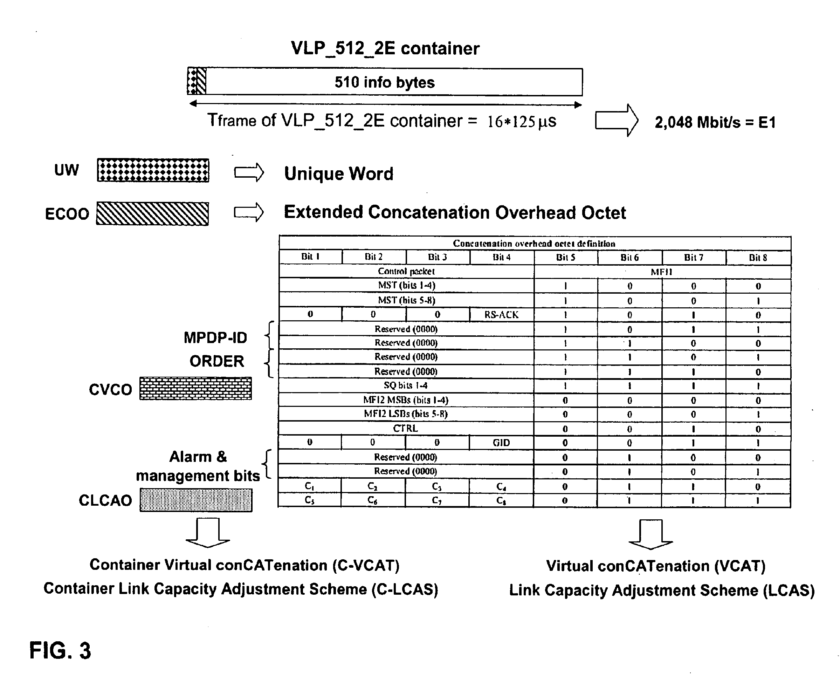

Within the VLP_512_2E container two bytes are reserved for special purposes as depicted in figure 3, i.e.:

- Unique Word UW;
- Extended Concatenation Overhead Octet ECOO.

Again, the "Unique Word" represents a synchronization word, which permits to identify the VLP_512_2E container frame alignment.

The "Extended Concatenation Overhead Octet" is the Concatenation Overhead Octet as described in ITU-T reference G.7043 where some reserved bits are used in order to transport, by time division multiplexing technique, Container Virtual Concatenation Octet and Container Link Capacity Adjustment Octet information. By means of this byte VCAT and LCAS operations can be realized as described in ITU-T recommendations G.7042 and G.7043. Additionally, Container Virtual Concatenation C-VCAT and Container Link Capacity Adjustment Scheme C-LCAS can be realized as better described in the following.

Both VLP_512_4E and VLP_512_2E containers have throughputs equal to 2,048 Mbit/s and can be mapped onto one unframed E1 signal.

In order to transport VLP over E1 signal (VLPoverE1) the continuous packet flow that carries the VLP packet flow is inserted in the payload bytes of the two containers, thus making it possible TO insert VLP traffic over PDH E1 signal.

Some of the arrangements described in the co-pending application already referred to in the foregoing involve segmentation/fragmentation of the VLP packets. These segmentation operations and the reassembling operations associated therewith lead to some net throughput degradation in terms of Real Throughput (Throughput$_{REAL}$) in comparison with the Theoretical Throughput (Throughput$_{THEO}$) that can easily be calculated in both cases. The Theoretical Throughput represents the payload throughput within VLP_512_xE.

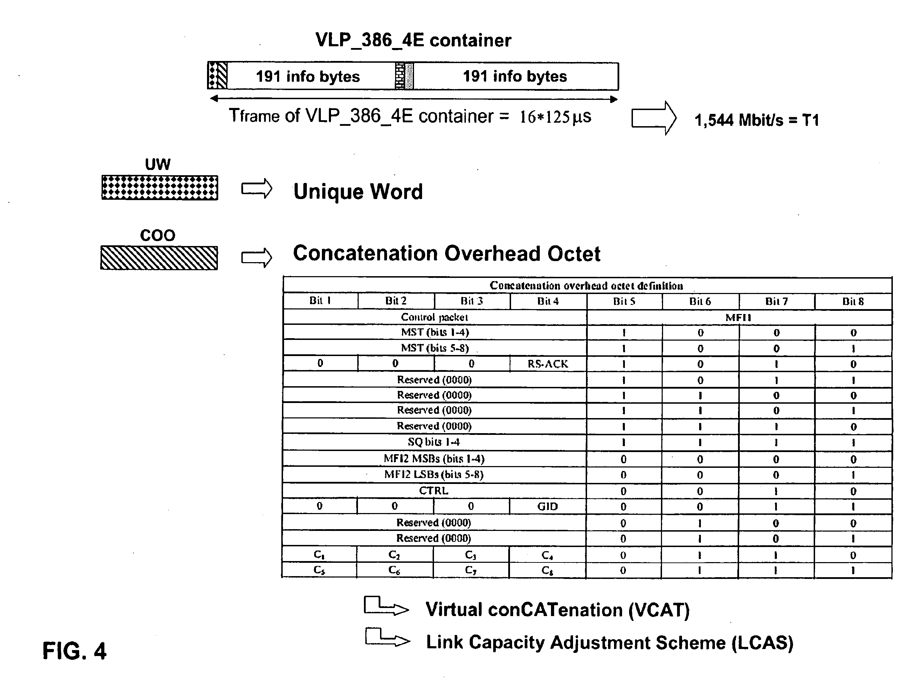

Figure 4 is a functional diagram illustrative of a sequence of steps taken for mapping the same continuous packet flow into one or more T1 (1544 Kbit/s) PDH signals.

Again, in order to realize this mapping two specific containers are been defined.

The first of these containers is designated a VLP_386_4E container.

As shown in figure 4, such a VLP_512_4E container is comprised of 386 bytes repeated every 2 ms. That means that VLP_386_4E container throughput is equal to 1,544 Mbit/s; therefore can be mapped onto one unframed T1 signal.

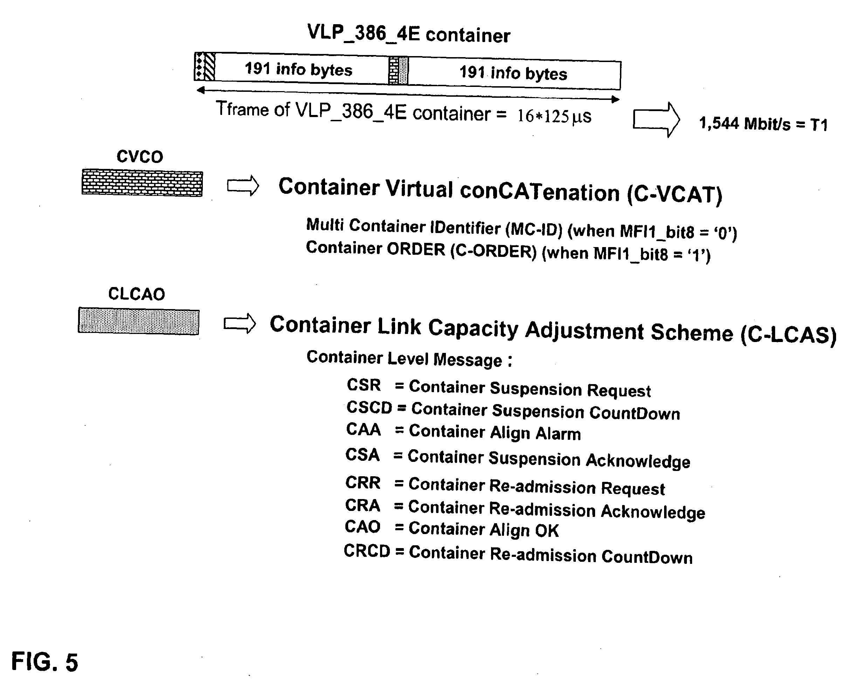

Within the VLP_386_4E container, four bytes are reserved for special purposes as depicted in figures 4 and 5:

- Unique Word UW;
- Concatenation Overhead Octet COO;
- Container Virtual Concatenation Octet CVCO;
- Container Link Capacity Adjustment Octet CLCAO.

The "Unique Word" represents a synchronization word, which permits to identify the VLP_386_4E container frame alignment.

The "Concatenation Overhead Octet" is the Concatenation Overhead Octet as described in ITU-T reference G.7043. By means of this byte VCAT and LCAS operations, as described in ITU-T references G.7042 and G.7043 can be realized.

The "Container Virtual Concatenation Octet" transports Multi Container Identifier MC-ID and container order information C-ORDER that is used to realize Container Virtual Concatenation C-VCAT as described in the following .

The "Container Link Capacity Adjustment Octet" transports alarm and management bits that are used in order to realize a Container Link Capacity Adjustment Scheme C-LCAS as described in the following.

The second type of container considered herein is designated a VLP_386_2E container.

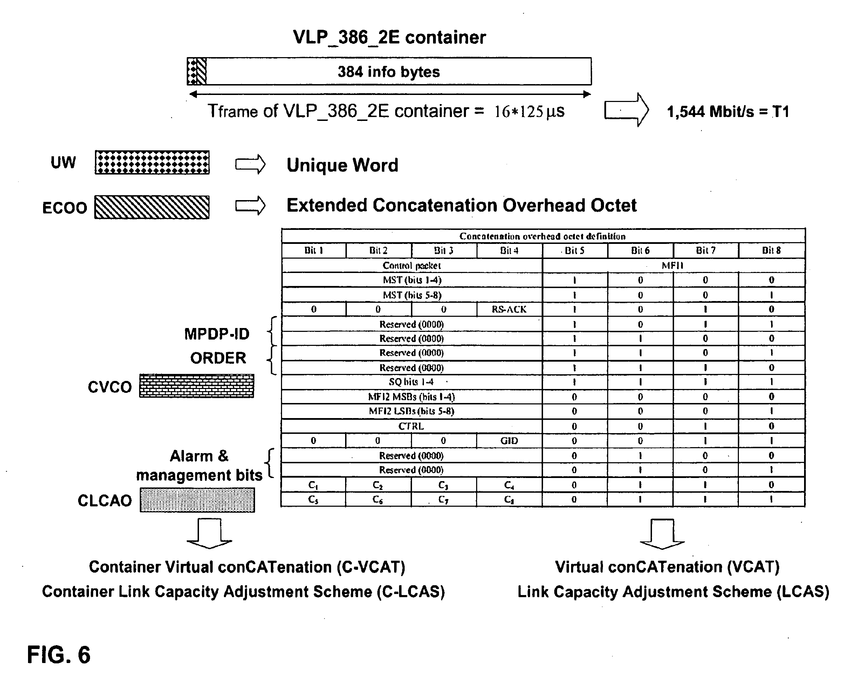

VLP_386_2E container is comprised of 386 bytes repeated every 2 ms. As is the case with the VLP_386_4E container, the throughput of the VLP_386_2E container is equal to 1,544 Mbit/s. which makes it possible to map the VLP_386_2E container onto one unframed T1 signal. Again, within the VLP_386_2E container two bytes are reserved for special purposes as depicted in figure 6:

- Unique Word UW;
- Extended Concatenation Overhead Octet ECOO.

Again, the "Unique Word" represents a synchronization word, which permits to identify the VLP_386_2E container frame alignment.

The "Extended Concatenation Overhead Octet" is the Concatenation Overhead Octet as described in ITU-T reference G.7043 where some reserved bits are used in order to transport, by a time division multiplexing technique, Container Virtual Concatenation Octet and Container Link Capacity Adjustment Octet information. By means of this byte VCAT and LCAS operations can be realized as described in ITU-T recommendations G.7042 and G.7043. Additionally, Container Virtual Concatenation C-VCAT and Container Link Capacity Adjustment Scheme C-LCAS can be realized as better described in the following.

Both VLP_386_4E and VLP_386_2E containers have throughputs equal to 1,544 Mbit/s, so that they can be mapped onto one unframed T1 signal.

In order to transport VLP over a T1 signal (VLPoverT1) the continuous packet flow that carries the VLP packet flow is inserted in the payload bytes of the two containers, thus making it possible TO insert VLP traffic over PDH T1 signal. Again, some of the arrangements described in the co-pending application already referred to in the foregoing involve segmentation/fragmentation of the VLP packets. These segmentation operations and the reassembling operations associated therewith lead to some net throughput degradation in terms of Real Throughput (Throughput$_{REAL}$) in comparison with the Theoretical Throughput (Throughput$_{THEO}$) that can easily be calculated in both cases. The Theoretical Throughput represents the payload throughput within VLP_ VLP_386_xE.

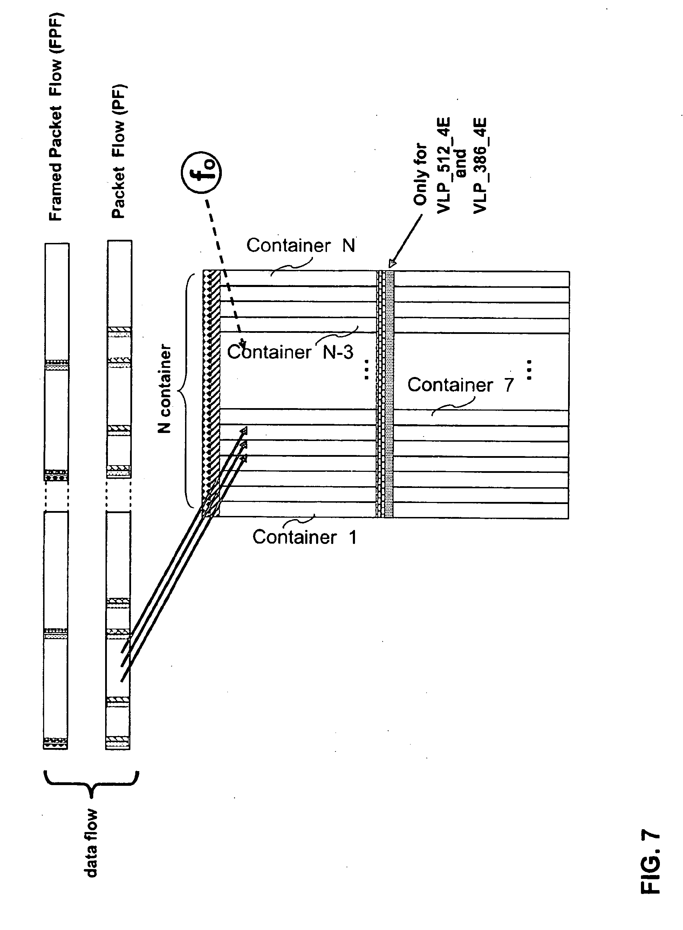

When the VLP data throughput is greater than the throughput which can be carried by a single VLP-Container, a Virtual Container Concatenation structure is used. In this case, as schematically shown in figure 7, data flow bytes are subdivided into different VLP-Containers. Since data flow bytes are inserted orthogonally into VLP-containers payload bytes, an increase in the number of the VLP-Containers used leads to a decrease in VLP transport delay.

In order to permit an orthogonal distribution of VLPs into VLP-Containers, the VLP-Containers are generated with the same time reference. The Extended Concatenation Overhead Octet and Container Virtual Concatenation Octet are used in order to manage Container Virtual concatenation.

The extra information bytes carried within the containers permit VLP-Container synchronization and reordering (i.e. reconstructing the original data flow bytes sequence).

Specifically:

- the Unique Word information, together with Frame Number information, enables re-synchronization of the containers;
- the Concatenation Overhead Octet information makes it possible to implement VCAT and LCAS as described in the ITU-T standard;
- the Container Virtual Concatenation Octet CVCO information makes it possible to implement Container Virtual conCATenation C-VCAT by transporting Virtual Container Concatenation Group and Virtual Container Concatenation Order information relative to the particular.
- the Container Link Capacity Adjustment Octet CLCAO makes it possible to implement Container Link Capacity Adjustment Scheme C-LCAS by transporting container adjustment messages.

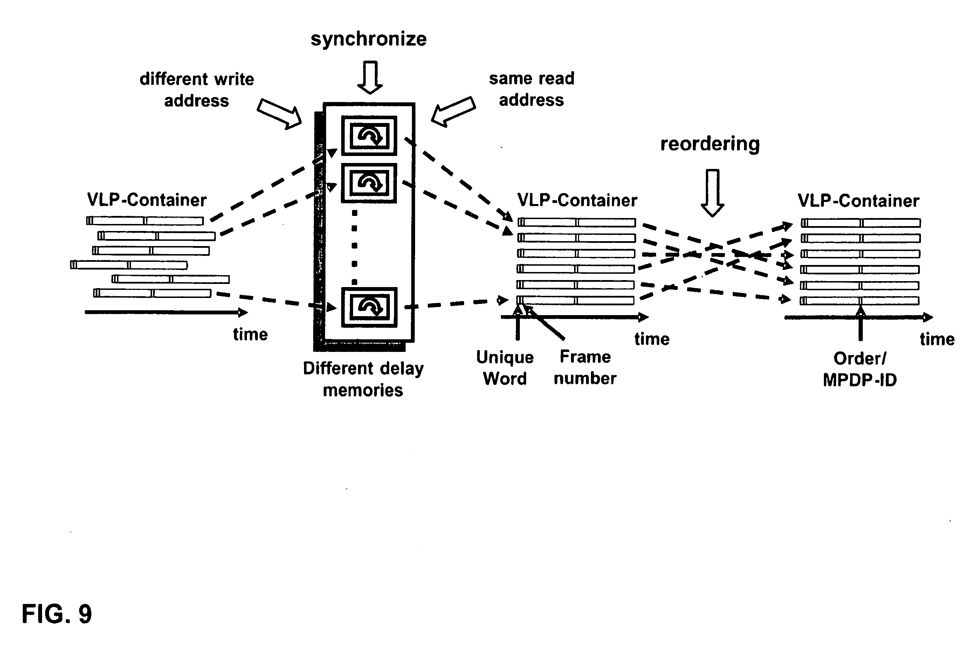

Upon reception of the VLP-Containers, these items of information permit delay compensation and reordering of the VLP-containers. This result is usually achieved by using different delay memories as schematically shown in figure 9.

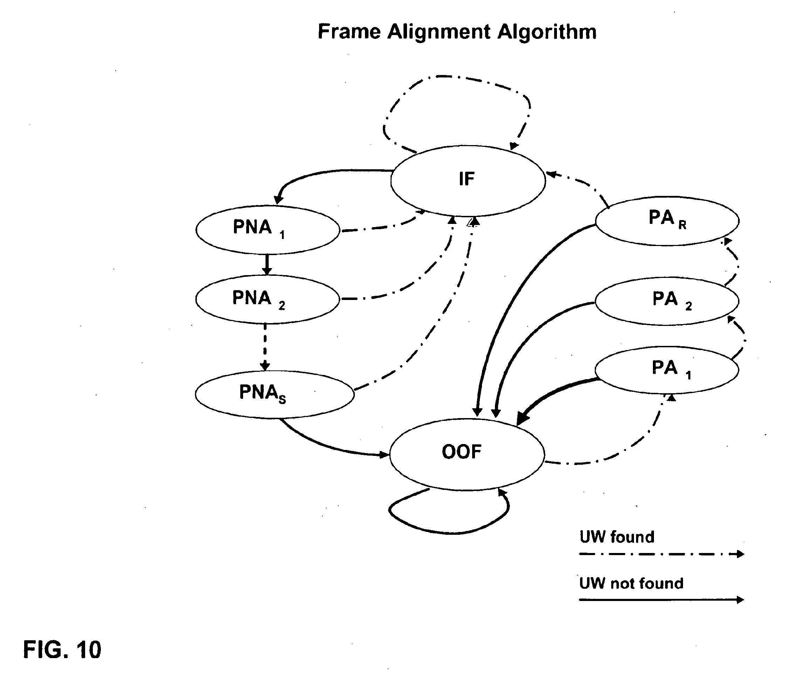

Within the framework of a general VLP-Container alignment strategy the VLP-Container stream is continuously parsed searching for Unique Word UW information. As schematically shown in figure 10, once a UW is found and confirmed (for an elapsed time of R "Probably Aligned" frames, $PA_{\#}$), an "In Frame" state IF is reached. On the other hand, if a VLP-Container's UW is not found within an elapsed time of S "Probably Not Aligned" frames $PNA_{\#}$ an "Out Of Frame" state OOF is declared. Once OOF frame is reached, R ($PA_{\#}$) confirmed frames are needed to reach back the IF state again. The OOF state, false detections and false un-detection might occur with different probabilities (where $P_{\varepsilon}$ is the bit error probability, p' is the digit probability (p'=0.5) and N is the number of bits in each frame).

Consequently, the Alignment Probability AP, i.e. the probability of reaching the alignment state can be expressed as:

$$AP = \left[ \left( 1 - P_{\varepsilon} \right)^8 \right]^{R+1}$$

Conversely, the False Misalignment Probability FMP, i.e. the probability of loss of alignment state for a false un-detections due to error rate is given by:

$$FMP = \left[ 1 - \left( 1 - P_{\varepsilon} \right)^8 \right]^{S+1}$$

The False Alignment Probability FAP, i.e. the probability of reaching the alignment state after false detections due to UW emulation is given by:

$$FAP = 1 - \left\{ 1 - \left[ \left( 1 - p' \right)^8 \right]^{R+1} \right\}^{N-1}$$

A container Link Capacity Adjustment Scheme C-LCAS can be resorted to whenever an advantage may exist in being able to change Virtual Container Concatenation Capacity by stopping data transfer into one particular VLP-container.

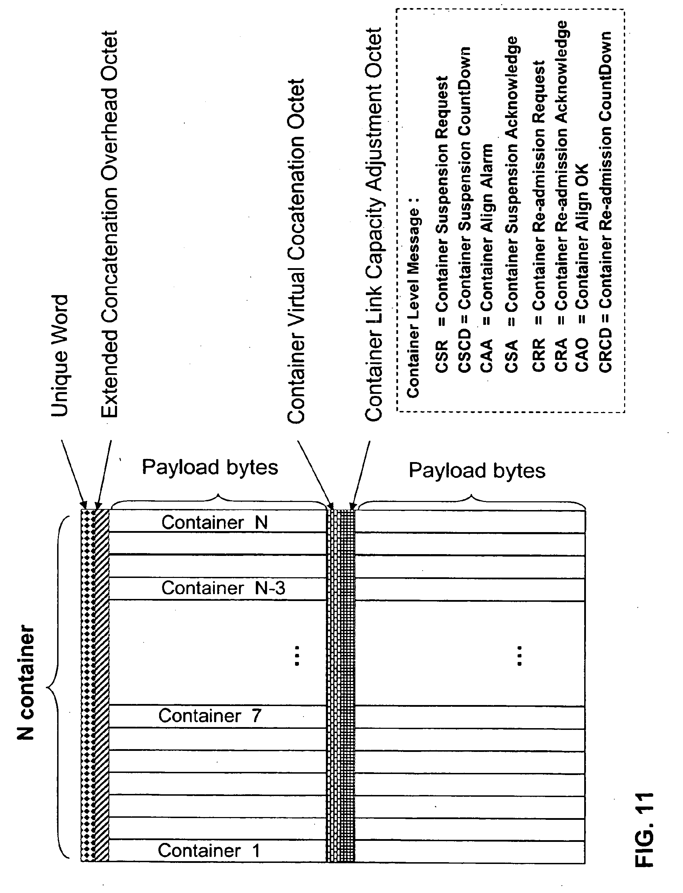

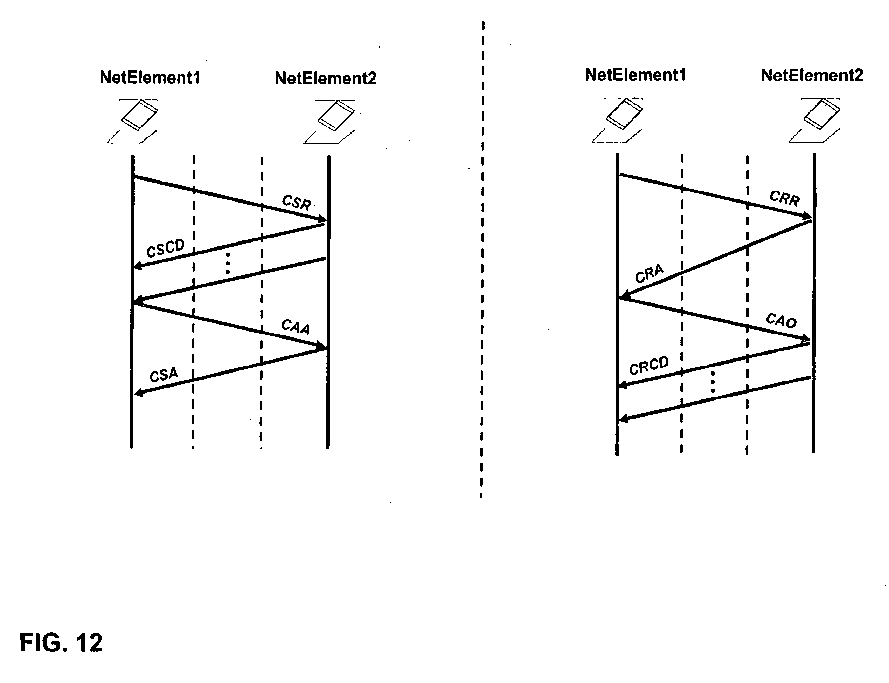

This approach can be used, for instance, in order to control data throughput in case of frequently and temporary local memory early overflow alarm inside circuits that perform F-GFP or FFP. This operation is schematically represented in the diagram of figure 11 and is referred to as "Container Capacity Adjustment Scheme", and further detailed in figure 12.

Specifically, the left-hand portion of figure 12 details the exchange of messages between two network elements designated NetElement1 and NetElement2, respectively, during a Container Suspension Procedure CSP

The following designations apply:

CSR = Container Suspension Request
CSCD = Container Suspension CountDown
CAA = Container Align Alarm
CSA = Container Suspension Acknowledge.

The right-hand portion of figure 12 details the exchange of messages between two network elements, again designated NetElement1 and NetElement2, respectively, during a Container Re-Admission Procedure CRP

The following designations apply:

CRR = Container Re-admission Request
CRA = Container Re-admission Acknowledge
CAO = Container Align OK
CRCD = Container Re-admission CountDown.

Various automatic procedures for VLP-container suspension and readmission can be implemented in order to standardize VLP-container level procedures to manage data throughput change. The Container Link Capacity Adjustment Octet is used in order to manage Container Link Capacity Adjustment Scheme. The GFP Payload Area is variable length area that may include from 4 to 65535 octets. This means that packets of size up to 65535 bytes can be mapped into GFP packet. However, for the purposes of this description maximum packet size is not a mandatory requirement.

Concerning the maximum number of PDH signals per Virtual Group, the ITU-T V-CAT recommendation makes it possible to concatenate up to 16 PDH signals into the same Virtual Group. By way of contrast, the C-VCAT strategy described herein makes possible concatenate up to 256 PDH flow. As regards PDH signal resynchronization, both the ITU-T recommendation and the C-VCAT strategy described herein permit to compensate differential delay values up to $\pm 256$ ms between PDH E1 signals. Specifically, while the ITU-T V-CAT is able to compensate up to $\pm 384$ ms, the C-VCAT strategy is able to compensate up to $\pm 256$ ms of differential delay between PDH T1 signals.

As regards Net throughput performance for each PDH signal, the applicant has conducted experimentation concerning both mapping onto PDH E1 and mapping onto PDH T1. Packets with average sizes of 64 and 256 bytes have been considered leading to thoroughly satisfactory performance.

All the processing steps illustrated in the figures herein can be performed by resorting to a dedicated processor system or a general purpose processor system suitably programmed (according to criteria that are known per se) to perform those processing steps.

Without prejudice to the underlying principles of the invention, the details and the embodiments may vary, even appreciably, with reference to what has been described by way of example only, without departing from the scope of the invention as defined by the annexed claims.

**List of used acronyms**

| | |
|---|---|
| CLCAO | Container Link Capacity Adjustment Octet |
| C-LCAS | Container Link Capacity Adjustment Scheme |
| COO | Concatenation Overhead Octet |
| CVCO | Container Virtual conCATenation Octet |
| C-ORDER | Container Order |
| C-VCAT | Container Virtual conCATenation |
| ECOO | Extended Concatenation Overhead Octet |
| MC-ID | Multi Container IDentifier |
| UW | Unique Word |
| VCAT | Virtual ConCATentation |
| VCG | Virtual Concatenation Group |
| VLP | Variable Length Packet |

**EP 2 017 989 B1**

**List of cited documents**

[D1]   ITU-T G.8040/Y.1340 (09/2005) «GFP frame mapping into Plesiochronous Digital Hierarchy (PDH)»
[D2]   ITU-T G.7041/Y.1303 (08/2005) «Generic framing procedure (GFP)»
D[3]   DALLAS SEMICONDUCTOR MAXIM http://pdfserv.maxim-ic.com/en/an/AN3849 «Ethernet-over-PDH Technology overview»

**Claims**

1.  A method to adapt Variable Length Packet traffic to a Plesiochronous Digital Hierarchy transport network, in the following denoted by PDH transport network using Variable Length Packet Containers, where a Variable Length Packet Container, in the following denoted by VLP Container (VLP_512_4E, VLP_386_4E), has the structure:

    - a Unique Word (UW) of one byte length;
    - a Concatenation Overhead Octet (COO) of one byte length;
    - a fixed number of bytes representing the payload (info bytes);
    **characterized** further by
    - a Container Virtual Concatenation octet (CVCO) of one byte length;
    - a Container Link Capacity Adjustment octet (CLCAO) of one byte length transporting alarm and management bits usable in order to realize Container Link Capacity Adjustment Scheme (C-LCAS);
    - another fixed number of bytes representing the payload (info bytes)

    and by the step
    where a Container Virtual Concatenation (C-VCAT) of said VLP Containers is carried out by using the Container Virtual Concatenation octet (CVCO) which contains Multi Container Identifiers (MC-ID) and a Container Order information (C-ORDER).

2.  A method to adapt Variable Length Packet traffic to a Plesiochronous Digital Hierarchy transport network, in the following denoted by PDH transport network using Variable Length Packet Containers, where a Variable Length Packet container, in the following denoted by VLP container (VLP_512_2E, VLP_386_2E) has the structure:

    - a unique word (UW) of one byte length;
    - a Extended Concatenation Overhead Octet (ECOO) of one byte length;
    - a fixed number of bytes representing the payload (info bytes);

    **characterized** further by the step
    where a Container Virtual Concatenation of said VLP Containers is carried out by using the Extended Concatenation Overhead Octet (ECOO) which transports by time division multiplexing technique a Container Link Capacity Adjustment octet (CLCAO) transporting alarm and management bits usable in order to realize Container Link Capacity Adjustment Scheme (C-LCAS) and a Container Virtual Concatenation octet (CVCO) which contains Multi Container Identifiers (MPDP) and a Container Order information (C-ORDER).

3.  The method of claims 1 or 2, wherein
    the Concatenation Overhead Octet (COO) respectively the Extended Concatenation Overhead Octet (ECOO) are used to permit ITU-T compliant Virtual Concatenation (VCAT) and Link Capacity Adjustment Scheme (LCAS) operations.

4.  The method of any of claims 1 to 3, wherein each said VLP container includes one Container Link Capacity Adjustment octet (CLCAO) to transport alarm and management bits to perform link capacity adjustment of said containers.

5.  The method of any of claims 1 to 4, wherein
    each VLP container is comprised of 512 bytes, with a throughput of 2,048 Mbit/s, whereby said containers can be mapped onto one unframed E1 PDH signal.

6.  The method of any of claims 1 to 4, wherein

each VLP container is comprised of 386 bytes, with a throughput of 1,544 Mbit/s, whereby said containers can be mapped onto one unframed T1 PDH signal.

7. A system for transmitting a data flow over at least one Plesiochronous Digital Hierarchy (PDH) channel, the system being configured to perform the method of any of claims 1 to 6.

**Patentansprüche**

1. Verfahren zum Anpassen von Variable-Length-Packet-Verkehr an ein Transportnetz der Plesiochronen Digitalen Hierarchie, das im Folgenden als PDH-Transportnetz bezeichnet wird, unter Verwendung von Variable-Length-Packet-Containers, wobei ein Variable-Length-Packet-Container, der im Folgenden als VLP-Container (VLP_512_4E, VLP_386_4E) bezeichnet wird, die folgende Struktur aufweist:

- ein Unique Word (UW) von einem Byte Länge;
- ein Concatenation Overhead Octet (COO) von einem Byte Länge;
- eine feste Anzahl von Byte, die die Nutzinformationen repräsentieren (info bytes);
ferner **gekennzeichnet durch**
- ein Container Virtual Concatenation Octet (CVCO) von einem Byte Länge;
- ein Container Link Capacity Adjustment Octet (CLCAO) von einem Byte Länge, das Alarm- und Verwaltungsbit transportiert, die benutzbar sind, um das Container Link Capacity Adjustment Scheme (C-LCAS) zu realisieren;
- eine weitere feste Anzahl von Byte, die die Nutzinformationen repräsentieren (info bytes),

und **durch** den Schritt,
wobei eine Container Virtual Concatenation (C-VCAT) der VLP-Container **durch** Verwendung des Container Virtual Concatenation Octet (CVCO) ausgeführt wird, das Multi Container Identifiers (MC-ID) und eine Information Container Order (C-ORDER) enthält.

2. Verfahren zum Anpassen von Variable-Length-Packet-Verkehr an ein Transportnetz der Plesiochronen Digitalen Hierarchie, das im Folgenden als PDH-Transportnetz bezeichnet wird, unter Verwendung von Variable-Length-Packet-Containers, wobei ein Variable-Length-Packet-Container, der im Folgenden als VLP-Container (VLP_512_2E, VLP_386_2E) bezeichnet wird, die folgende Struktur aufweist:

- ein Unique Word (UW) von einem Byte Länge;
- ein Extended Concatenation Overhead Octet (ECOO) von einem Byte Länge;
- eine feste Anzahl von Byte, die Nutzinformationen repräsentieren (info bytes);

ferner **gekennzeichnet durch** den Schritt,
wobei eine Container Virtual Concatenation der VLP-Container durch Verwendung des Extended Concatenation Overhead Octet (ECOO), das **durch** Zeitmultiplextechnik ein Container Link Capacity Adjustment Octet (CLCAO) transportiert, das Alarm- und Verwaltungsbit transportiert, die benutzbar sind, um das Container Link Capacity Adjustment Scheme (C-LCAS) zu realisieren, und eines Container Virtual Concatenation Octet (CVCO), das Multi Container Identifiers (MPDP) und eine Information Container Order (C-ORDER) enthält, ausgeführt wird.

3. Verfahren nach Anspruch 1 oder 2, wobei
das Concatenation Overhead Octet (COO) bzw. das Extended Concatenation Overhead Octet (ECOO) verwendet werden, um ITU-T-kompatible Operationen der Virtual Concatenation (VCAT) und des Link Capacity Adjustment Scheme (LCAS) zu gestatten.

4. Verfahren nach einem der Ansprüche 1 bis 3, wobei jeder VLP-Container ein Container Link Capacity Adjustment Octet (CLCAO) zum Transport von Alarm- und Verwaltungsbit zur Durchführung einer Streckenkapazitätjustierung der Container enthält.

5. Verfahren nach einem der Ansprüche 1 bis 4, wobei jeder VLP-Container aus 512 Byte besteht, mit einem Durchsatz von 2048 Mbit/s, wobei die Container auf ein ungeframetes E1-PDH-Signal abgebildet werden können.

6. Verfahren nach einem der Ansprüche 1 bis 4, wobei jeder VLP-Container aus 386 Byte besteht, mit einem Durchsatz von 1544 Mbit/s, wobei die Container auf ein ungeframetes T1-PDH-Signal abgebildet werden können.

7. System zum Übertragen eines Datenflusses über mindestens einen Kanal der Plesiochronen Digitalen Hierarchie (PDH), wobei das System dafür ausgelegt ist, das Verfahren nach einem der Ansprüche 1 bis 6 auszuführen.

**Revendications**

1. Procédé d'adaptation d'un trafic de Paquets à Longueur Variable à un réseau de transport à Hiérarchie Numérique Plésiochrone, nommé ci-après réseau de transport PDH, utilisant des Conteneurs de Paquets à Longueur Variable, où un Conteneur de Paquets à Longueur Variable, nommé ci-après Conteneur VLP (VLP_512_4E, VLP_386_4E), a la structure :

   - un Mot Unique (UW) d'une longueur d'un octet ;
   - un Octet Supplémentaire de Concaténation (COO) d'une longueur d'un octet ;
   - un nombre fixe d'octets représentant la charge utile (octets d'info) ;
   **caractérisé en outre par**
   - un octet de Concaténation Virtuelle de Conteneurs (CVCO) d'une longueur d'un octet ;
   - un octet d'Ajustement de Capacité de Liaison de Conteneurs (CLCAO) d'une longueur d'un octet transportant des bits d'alarme et de gestion utilisables pour mettre en oeuvre un Schéma d'Ajustement de Capacité de Liaison de Conteneurs (C-LCAS) ;
   - un autre nombre fixe d'octets représentant la charge utile (octets d'info) ;

   et par l'étape
   dans laquelle une Concaténation Virtuelle de Conteneurs (C-VCAT) desdits Conteneurs VLP est effectuée en utilisant l'octet de Concaténation Virtuelle de Conteneurs (CVCO) qui contient des Identifiants de Conteneurs Multiples (MC-ID) et une information d'Ordre de Conteneurs (C-ORDER).

2. Procédé d'adaptation d'un trafic de Paquets à Longueur Variable à un réseau de transport à Hiérarchie Numérique Plésiochrone, nommé ci-après réseau de transport PDH, utilisant des Conteneurs de Paquets à Longueur Variable, dans lequel un conteneur de Paquets à Longueur Variable, nommé ci-après conteneur VLP (VLP_512_4E, VLP_386_4E), a la structure :

   - un Mot Unique (UW) d'une longueur d'un octet ;
   - un Octet Supplémentaire de Concaténation Étendu (ECOO) d'une longueur d'un octet ;
   - un nombre fixe d'octets représentant la charge utile (octets d'info) ;

   **caractérisé en outre par** l'étape
   dans laquelle une Concaténation Virtuelle de Conteneurs desdits Conteneurs VLP est effectuée en utilisant l'octet Supplémentaire de Concaténation Étendu (ECOO) qui transporte par une technique de multiplexage par répartition dans le temps un octet d'Ajustement de Capacité de Liaison de Conteneurs (CLCAO) transportant des bits d'alarme et de gestion utilisables pour mettre en oeuvre un Schéma d'Ajustement de Capacité de Liaison de Conteneurs (C-LCAS) et un octet de Concaténation Virtuelle de Conteneurs (CVCO) qui contient des Identifiants de Conteneurs Multiples (MPDP) et une information d'Ordre de Conteneurs (C-ORDER).

3. Procédé selon la revendication 1 ou 2, dans lequel l'Octet Supplémentaire de Concaténation, respectivement l'Octet Supplémentaire de Concaténation Étendu (ECOO) sont utilisés pour permettre des opérations de Concaténation Virtuelle (VCAT) et de Schéma d'Ajustement de Capacité de Liaison (LCAS) conformes à ITU-T.

4. Procédé selon l'une quelconque des revendications 1 à 3, dans lequel chaque dit conteneur VLP inclut un octet d'Ajustement de Capacité de Liaison de Conteneurs (CLCAO) pour transporter des bits d'alarme et de gestion pour exécuter un ajustement de capacité de liaison desdits conteneurs.

5. Procédé selon l'une quelconque des revendications 1 à 4, dans lequel chaque conteneur VLP est composé de 512 octets, avec un débit de 2 048 Mbit/s, d'où il résulte que lesdits conteneurs peuvent être mappés sur un signal E1 PDH non tramé.

6. Procédé selon l'une quelconque des revendications 1 à 4, dans lequel chaque conteneur VLP est composé de 386 octets, avec un débit de 1 544 Mbit/s, d'où il résulte que lesdits conteneurs peuvent être mappés sur un signal T1 PDH non tramé.

7. Système pour transmettre un flux de données sur au moins un canal à Hiérarchie Numérique Plésiochrone (PDH), le système étant configuré pour mettre en oeuvre le procédé selon l'une quelconque des revendications 1 à 6.

**VLP_512_4E container**

| | 254 info bytes | | 254 info bytes |
|---|---|---|---|

Tframe of VLP_512_4E container = $16*125\,\mu s$  ⟹  **2,048 Mbit/s = E1**

**UW**

⟹ **Unique Word**

**COO**

⟹ **Concatenation Overhead Octet**

| Concatenation overhead octet definition | | | | | | | |
|---|---|---|---|---|---|---|---|
| Bit 1 | Bit 2 | Bit 3 | Bit 4 | Bit 5 | Bit 6 | Bit 7 | Bit 8 |
| Control packet | | | | MFII | | | |
| MST (bits 1-4) | | | | 1 | 0 | 0 | 0 |
| MST (bits 5-8) | | | | 1 | 0 | 0 | 1 |
| 0 | 0 | 0 | RS-ACK | 1 | 0 | 1 | 0 |
| Reserved (0000) | | | | 1 | 0 | 1 | 1 |
| Reserved (0000) | | | | 1 | 1 | 0 | 0 |
| Reserved (0000) | | | | 1 | 1 | 0 | 1 |
| Reserved (0000) | | | | 1 | 1 | 1 | 0 |
| SQ bits 1-4 | | | | 1 | 1 | 1 | 1 |
| MF12 MSBs (bits 1-4) | | | | 0 | 0 | 0 | 0 |
| MF12 LSBs (bits 5-8) | | | | 0 | 0 | 0 | 1 |
| CTRL | | | | 0 | 0 | 1 | 0 |
| 0 | 0 | 0 | GID | 0 | 0 | 1 | 1 |
| Reserved (0000) | | | | 0 | 1 | 0 | 0 |
| Reserved (0000) | | | | 0 | 1 | 0 | 1 |
| $C_1$ | $C_2$ | $C_3$ | $C_4$ | 0 | 1 | 1 | 0 |
| $C_5$ | $C_6$ | $C_7$ | $C_8$ | 0 | 1 | 1 | 1 |

⟹ **Virtual conCATenation (VCAT)**

⟹ **Link Capacity Adjustment Scheme (LCAS)**

**FIG. 1**

**VLP_512_4E container**

| 254 info bytes | 254 info bytes |

Tframe of VLP_512_4E container = $16*125 \mu s$ ⟹ 2,048 Mbit/s = E1

CVCO

⟹ **Container Virtual conCATenation (C-VCAT)**

Multi Container IDentifier (MC-ID) (when MFI1_bit8 = '0')
Container ORDER (C-ORDER) (when MFI1_bit8 = '1')

CLCAO

⟹ **Container Link Capacity Adjustment Scheme (C-LCAS)**

Container Adjustment Message :

CSR = Container Suspension Request
CSCD = Container Suspension CountDown
CAA = Container Align Alarm
CSA = Container Suspension Acknowledge
CRR = Container Re-admission Request
CRA = Container Re-admission Acknowledge
CAO = Container Align OK
CRCD = Container Re-admission CountDown

**FIG. 2**

EP 2 017 989 B1

## VLP_512_2E container

| 510 info bytes |
|---|

Tframe of VLP_512_2E container = $16*125\,\mu s$ ⟹ **2,048 Mbit/s = E1**

UW ⟹ **Unique Word**

ECOO ⟹ **Extended Concatenation Overhead Octet**

MPDP-ID

ORDER

CVCO

Alarm & management bits

CLCAO

| Concatenation overhead octet definition | | | | | | | |
|---|---|---|---|---|---|---|---|
| Bit 1 | Bit 2 | Bit 3 | Bit 4 | Bit 5 | Bit 6 | Bit 7 | Bit 8 |
| Control packet | | | | MFI1 | | | |
| MST (bits 1-4) | | | | 1 | 0 | 0 | 0 |
| MST (bits 5-8) | | | | 1 | 0 | 0 | 1 |
| 0 | 0 | 0 | RS-ACK | 1 | 0 | 1 | 0 |
| Reserved (0000) | | | | 1 | 0 | 1 | 1 |
| Reserved (0000) | | | | 1 | 1 | 0 | 0 |
| Reserved (0000) | | | | 1 | 1 | 0 | 1 |
| Reserved (0000) | | | | 1 | 1 | 1 | 0 |
| SQ bits 1-4 | | | | 1 | 1 | 1 | 1 |
| MFI2 MSBs (bits 1-4) | | | | 0 | 0 | 0 | 0 |
| MFI2 LSBs (bits 5-8) | | | | 0 | 0 | 0 | 1 |
| CTRL | | | | 0 | 0 | 1 | 0 |
| 0 | 0 | 0 | GID | 0 | 0 | 1 | 1 |
| Reserved (0000) | | | | 0 | 1 | 0 | 0 |
| Reserved (0000) | | | | 0 | 1 | 0 | 1 |
| $C_1$ | $C_2$ | $C_3$ | $C_4$ | 0 | 1 | 1 | 0 |
| $C_5$ | $C_6$ | $C_7$ | $C_8$ | 0 | 1 | 1 | 1 |

**Container Virtual conCATenation (C-VCAT)**
**Container Link Capacity Adjustment Scheme (C-LCAS)**

**Virtual conCATenation (VCAT)**
**Link Capacity Adjustment Scheme (LCAS)**

## FIG. 3

EP 2 017 989 B1

**VLP_386_4E container**

| | 191 info bytes | | 191 info bytes |
|---|---|---|---|

Tframe of VLP_386_4E container = $16*125\,\mu s$ ⟹ **1,544 Mbit/s = T1**

**UW**

⟹ **Unique Word**

**COO**

⟹ **Concatenation Overhead Octet**

| Concatenation overhead octet definition | | | | | | | |
|---|---|---|---|---|---|---|---|
| Bit 1 | Bit 2 | Bit 3 | Bit 4 | Bit 5 | Bit 6 | Bit 7 | Bit 8 |
| Control packet | | | | MFI1 | | | |
| MST (bits 1-4) | | | | 1 | 0 | 0 | 0 |
| MST (bits 5-8) | | | | 1 | 0 | 0 | 1 |
| 0 | 0 | 0 | RS-ACK | 1 | 0 | 1 | 0 |
| Reserved (0000) | | | | 1 | 0 | 1 | 1 |
| Reserved (0000) | | | | 1 | 1 | 0 | 0 |
| Reserved (0000) | | | | 1 | 1 | 0 | 1 |
| Reserved (0000) | | | | 1 | 1 | 1 | 0 |
| SQ bits 1-4 | | | | 1 | 1 | 1 | 1 |
| MFI2 MSBs (bits 1-4) | | | | 0 | 0 | 0 | 0 |
| MFI2 LSBs (bits 5-8) | | | | 0 | 0 | 0 | 1 |
| CTRL | | | | 0 | 0 | 1 | 0 |
| 0 | 0 | 0 | GID | 0 | 0 | 1 | 1 |
| Reserved (0000) | | | | 0 | 1 | 0 | 0 |
| Reserved (0000) | | | | 0 | 1 | 0 | 1 |
| $C_1$ | $C_2$ | $C_3$ | $C_4$ | 0 | 1 | 1 | 0 |
| $C_5$ | $C_6$ | $C_7$ | $C_8$ | 0 | 1 | 1 | 1 |

⟹ **Virtual conCATenation (VCAT)**

⟹ **Link Capacity Adjustment Scheme (LCAS)**

**FIG. 4**

EP 2 017 989 B1

## VLP_386_4E container

Tframe of VLP_386_4E container = $16*125\,\mu s$ $\implies$ 1,544 Mbit/s = T1

**CVCO**

$\implies$ **Container Virtual conCATenation (C-VCAT)**

Multi Container IDentifier (MC-ID) (when MFI1_bit8 = '0')
Container ORDER (C-ORDER) (when MFI1_bit8 = '1')

**CLCAO**

$\implies$ **Container Link Capacity Adjustment Scheme (C-LCAS)**

Container Level Message :

CSR  = Container Suspension Request
CSCD = Container Suspension CountDown
CAA  = Container Align Alarm
CSA  = Container Suspension Acknowledge

CRR  = Container Re-admission Request
CRA  = Container Re-admission Acknowledge
CAO  = Container Align OK
CRCD = Container Re-admission CountDown

# FIG. 5

EP 2 017 989 B1

**VLP_386_2E container**

| | |
|---|---|
| | **384 info bytes** |

Tframe of VLP_386_2E container = $16*125\,\mu s$ ⟹ **1,544 Mbit/s = T1**

**UW** ⟹ **Unique Word**

**ECOO** ⟹ **Extended Concatenation Overhead Octet**

MPDP-ID
ORDER

**CVCO**

Alarm &
management bits

**CLCAO**

| Concatenation overhead octet definition | | | | | | | |
|---|---|---|---|---|---|---|---|
| Bit 1 | Bit 2 | Bit 3 | Bit 4 | Bit 5 | Bit 6 | Bit 7 | Bit 8 |
| Control packet | | | | MFI1 | | | |
| MST (bits 1-4) | | | | 1 | 0 | 0 | 0 |
| MST (bits 5-8) | | | | 1 | 0 | 0 | 1 |
| 0 | 0 | 0 | RS-ACK | 1 | 0 | 1 | 0 |
| Reserved (0000) | | | | 1 | 0 | 1 | 1 |
| Reserved (0000) | | | | 1 | 1 | 0 | 0 |
| Reserved (0000) | | | | 1 | 1 | 0 | 1 |
| Reserved (0000) | | | | 1 | 1 | 1 | 0 |
| SQ bits 1-4 | | | | 1 | 1 | 1 | 1 |
| MFI2 MSBs (bits 1-4) | | | | 0 | 0 | 0 | 0 |
| MFI2 LSBs (bits 5-8) | | | | 0 | 0 | 0 | 1 |
| CTRL | | | | 0 | 0 | 1 | 0 |
| 0 | 0 | 0 | GID | 0 | 0 | 1 | 1 |
| Reserved (0000) | | | | 0 | 1 | 0 | 0 |
| Reserved (0000) | | | | 0 | 1 | 0 | 1 |
| $C_1$ | $C_2$ | $C_3$ | $C_4$ | 0 | 1 | 1 | 0 |
| $C_5$ | $C_6$ | $C_7$ | $C_8$ | 0 | 1 | 1 | 1 |

Container Virtual conCATenation (C-VCAT)
Container Link Capacity Adjustment Scheme (C-LCAS)

Virtual conCATenation (VCAT)
Link Capacity Adjustment Scheme (LCAS)

## FIG. 6

Framed Packet Flow (FPF)

Packet Flow (PF)

data flow

$f_o$

N container

Container N

Container N-3

Container 1

Only for
VLP_512_4E
and
VLP_386_4E

Container 7

FIG. 7

Unique Word

Extended Concatenation Overhead Octet

Container Virtual Cocatenation Octet

Container Link Capacity Adjustment Octet

Payload bytes

Payload bytes

N container

Container N

Container N-3

⋮

Container 7

Container 1

⋮

FIG. 8

**FIG. 9**

EP 2 017 989 B1

Frame Alignment Algorithm

FIG. 10

**FIG. 11**

Labels:
- Unique Word
- Extended Concatenation Overhead Octet
- Container Virtual Cocatenation Octet
- Container Link Capacity Adjustment Octet

Container Level Message :

- CSR = Container Suspension Request
- CSCD = Container Suspension CountDown
- CAA = Container Align Alarm
- CSA = Container Suspension Acknowledge
- CRR = Container Re-admission Request
- CRA = Container Re-admission Acknowledge
- CAO = Container Align OK
- CRCD = Container Re-admission CountDown

Payload bytes    Payload bytes

N container

- Container N
- Container N-3
- Container 7
- Container 1

FIG. 12